# EUROPEAN PATENT APPLICATION

(11) **EP 4 209 704 A1**
(43) Date of publication of application: **12.07.2023**
(21) Application number: 22213434.8
(22) Date of filing: 14.12.2022
(51) Int. Cl.: F16L 55/18, F16L 55/44, B21D 1/08, B21D 3/00

(54) **PIPE REPAIR DEVICE**

(30) Priority: 05.01.2022 IT 202200000122
(71) Applicant: EITI S.r.l., 10121 Torino (IT)
(72) Inventor: PASQUALINI, Dario, 10040 Cumiana (IT)
(74) Representative: Lunati & Mazzoni S.r.L.

(57) **Abstract**

It is provided a repair device (1) for a pipe repair device comprising at least one body (2) extending along a main axis (2a) between a first end (20) and a second end (21) and telescopically expandable, in a controlled manner, along the main axis (2a) so as to bring the ends (20, 21) closer or further apart from each other, a first contact plate (3) connected to the body (2) at the first end (20) and extending along a first plane (3a) curved transversal to the main axis (2a), a second contact plate (4) connected to the body (2) at the second end (21) and extending along a second plane (4a) curved transversal to the main axis (2a), wherein the plates (3, 4) are removably constrained to the body (2) in such a way that they can be replaced.

## Description

The present invention relates to a pipe repair device of the type specified in the preamble to the first claim.

More particularly, the present invention relates to a repair device capable of eliminating surface defects, for example dents, by compression on pipes preferably made of metal. Similar devices are described in the patent documents CN-U-210661896, CN-A-111853419, CN-A-113623482 and CN-U-206779194.

As is well known, metal pipes can be subject, for example due to mechanical damage during production or transport, to surface bending that leads to dents.

Naturally, such dents are damaging in that they lead locally to striations of the duct enclosed by the pipe walls which can, if very extensive, lead to local obstruction of the entire duct section.

Therefore, in situations where there are surface defects on the pipe, repair devices should be used that compress the dent in such a way that the normal development of the wall surface is restored.

Examples of similar devices are described, for example, in patent applications WO-A-9711306 and CN-A-110700380.

The patent application WO-A-9711306 describes a hydraulically operable expander for straightening and repairing partially collapsed pipes or pipelines comprising at least one cylinder extending along a central longitudinal axis and comprising one or more holes in a single cross-sectional area transverse to the longitudinal axis and one or more pistons inserted into each hole in the cylinder. Each piston is then connected to a hydraulic channel so as to be able to move and expand, with respect to the longitudinal axis, an expansion segment fixed thereto; in addition, synchronisation mechanisms are provided to allow several expansion segments to be expanded in a synchronous and equivalent manner.

The patent application CN-A-110700380 describes an expansion device comprising a sleeve including a plurality of multiple support plates and a support mechanism connected with the multiple support plates that can guide the support plates to move in the radial direction of the sleeve to expand or shrink the sleeve.

The known technique described includes some important drawbacks.

In particular, all devices define a complex structure. In detail, all devices need to include mechanisms capable of pushing expansion elements radially with respect to a central body.

Thus, the devices of the known technique cannot be cheap.

In addition, devices of the known technique define high weights and cannot be used efficiently on pipes defining completely different diameters.

In this situation, the technical task underlying the present invention is to devise a pipe repair device capable of substantially obviating at least part of the aforementioned drawbacks.

In the context of said technical task, it is an important scope of the invention to obtain a pipe repair device defining a simple structure. Therefore, a further scope of the invention is to achieve a pipe repair device that is also economical.

Furthermore, a further important scope of the invention is to realise a pipe repair device which can define low weights, but which is, at the same time, effectively usable on pipes defining completely different diameters.

In conclusion, a further scope of the invention is to realise a pipe repair device that enables the individual pipe to conform to the respective shape standard and dimensional tolerances.

The specified technical task and purposes are achieved by a pipe repair device as claimed in the appended claim 1.

Preferred technical solutions are disclosed in the dependent claims.

The features and advantages of the invention are hereinafter clarified by the detailed description of preferred embodiments of the invention with reference to the appended drawings, wherein:

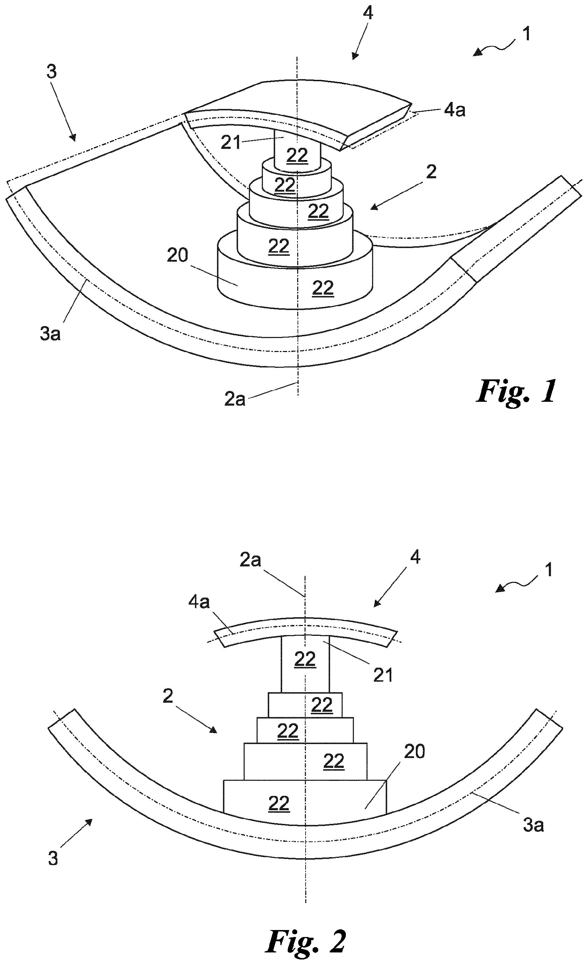

the **Fig. 1** illustrates a perspective view of a pipe repair device according to the invention; and
the **Fig. 2** illustrates a side view of a repair device for a pipe repair device according to the invention.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices.

The measurements and data reported in this text are to be considered, unless otherwise indicated, as performed in the International Standard Atmosphere ICAO (ISO 2533:1975).

With reference to the Figures, the repair device for a pipe repair device according to the invention is globally referred to as number **1**.

The device 1 is configured to allow the repair of at least one pipe and possibly also a pipeline, i.e. a set of pipes, of various kinds. In particular, the device 1 is preferably used on a pipe repair device of a metal type.

In brief, the device comprises at least one body **2**.

The body 2 is substantially the supporting element of the device 1. In detail, preferably, the body 2 is developed along a main axis **2a**.

The main axis 2a is the axis of major development of the body 2. However, body 2 may also develop in other directions without limitation.

The body 2 also defines at least a first end **20** and a second end **21**.

The first end 20 and the second end 21 are essentially the border areas of body 2. Therefore, the body 2 preferably develops between the first end 20 and the second end 21.

Even more in detail, the body 2 develops between the ends 20, 21 along the main axis 2a. Thus, the ends 20, 21 are substantially mutually aligned with respect to the main axis 2a and in opposite position along the main axis 2a on the body 2.

Furthermore, advantageously, the body 2 is telescopically expandable. In particular, the body 2 is telescopically expandable, in a controlled manner, along the main axis 2a. Thus, in this way, the ends 20, 21 can be mutually approached or moved apart.

By the terminology "in a controlled manner" it is meant that the body 2 is preferably expandable not in an idle manner.

In fact, the device 1 may also comprise a push mechanism. If present, the latter is preferably configured to realise a pushing force along the main axis 2a. More specifically still, the thrust mechanism realises the thrust force from the first end towards the second end 21 or vice versa.

The thrust mechanism may, moreover, be mechanical, or electromechanical, or pneumatic or hydraulic, or it may combine the aforementioned technologies or adopt other technologies.

The body 2, in particular, may comprise a plurality of cylinders **22**.

The cylinders 22 may, therefore, be centred with respect to the main axis 2a. Furthermore, they may be concentric. Thus, the cylinders 22 may be threaded into each other consecutively so as to make an expandable telescopic structure.

Thus, the pushing mechanism may be configured to push the cylinder 22 at the second end 21 away from the cylinder 22 at the first end 20 or vice versa.

Naturally, the body 2 could be configured to be manually expanded by a user and not comprise push mechanisms.

Or, the device 1 could also comprise a plurality of bodies 2 flanked so that mutually parallel main axes 2a are defined.

In any case, preferably, the device 1 comprises at least one first plate **3**.

The first plate 3 is substantially a contact plate. Therefore, the first plate 3 is substantially suitable for contacting the walls of a pipe.

The first plate 3 is, moreover, connected to the body 2 at the first end 20. In particular, the first plate 3 may be fixed with respect to the first end 20 or may be removably constrained thereto so as to be replaceable.

Furthermore, the first end 3 is developed along a first plane **3a**.

The first plane 3a is advantageously a curved plane, i.e. defining its own curvature. Thus, the first plane 3a is also curved so that it can effectively contact the curved walls of a pipe repair device.

The first plate 3a is, in addition, transverse to the main axis 2a. For example, the main axis 2a may just be perpendicular to the first plane 3a.

Advantageously, the device 1 also comprises a second plate **4**.

The second plate 4 is substantially similar to the first plate 3.

Therefore, the second plate 4 is also substantially a contact plate suitable, therefore, for contacting the walls of a pipe. Preferably, the second plate 4 is capable of contacting a dent in the pipe.

The second plate 4 is, moreover, connected to the body 2 at the second end 21. Thus, the second plate 4 is connected to the body 2 at an area opposite the first plate 3 along the main axis 2a.

Notably, the second plate 4 may also be fixed with respect to the second end 21 or may be removably constrained to it so as to be replaceable.

Furthermore, the second end 4 extends along a second plane **4a**.

The second plane 4a is advantageously a curved plane, i.e. defining its own curvature. Thus, the second plane 4a is also curved so that it can effectively contact the curved walls of a pipe repair device.

The second plate 4a is, in addition, transverse to the main axis 2a. For example, the main axis 2a may just be perpendicular to the second plane 4a.

In general, first plate 3 and second plate 4 are convex, and therefore have concavity facing the body 2.

Preferably, the first plate 3 is larger than the second plate 4.

Furthermore, preferably, the first plate 3a defines a greater curvature than the second plate 4a. The term curvature, Naturally, refers to the reciprocal of the radius of curvature.

Therefore, in other words, the first plane 3a defines a smaller radius of curvature than the second plane 4a. More specifically, planes 3a, 4a may differ from each other in terms of curvature by an amount approximately equal to 1 × 10⁻³.

Furthermore, in the preferred embodiment, the first end 20 is constrained to the first plate 3 at the barycentric point of the first plate 3.

In contrast, the second end 21 is constrained to the second plate 4 at the barycentric point of the second plate 4.

Preferably, the first end 20 is larger in size than the second end 21.

Furthermore, in the preferred but not exclusive embodiment, the first plate 3 defines a rectangular shape on the first plane 3a, the second plate 4 defines a rectangular shape on the second plane 4a, the cylinder 22 at the first end 20 defines a diameter less than half of the diagonals of the shape of the first plate 3, and the cylinder 22 at the second end 21 defines a diameter less than half of the diagonals of the shape of the second plate 4.

The device 1 may also be used to make a pipeline repair kit.

Thus, the kit may comprise the device 1, with the plates 3, 4 removably constrained on the body 2, and a plurality of different plates 3, 4 replaceable on the body 2 and defining mutually different sizes and/or curvatures so as to allow the device 1 to be adapted effectively on any pipe.

The operation of the repair device 1 for a pipe repair device previously described in structural terms is substantially described below.

The invention comprises a novel process for repairing a pipe carried out by means of the device 1.

In particular, the repair is carried out on a dented pipe, thus bounded by a closed wall including at least one dent.

The procedure thus comprises at least the preliminary steps of arrangement and expansion.

In the arrangement phase, the first plate 3 is placed in contact with the pipe wall in a position diametrically opposite the dent.

Then, in the expansion phase, the body 2 is expanded. The expansion can be done manually or by means of a pushing mechanism, as mentioned above.

In addition, the process includes a further arrangement phase. In this further phase, the second plate 4 is placed in contact with the wall at the dent.

In conclusion, the procedure comprises a compression phase of the dent.

The compression takes place by realising a pushing force between the first plate 3 and the second plate 4.

The repair device 1 for a pipe repair device according to the invention achieves important advantages.

Indeed, the repair device 1 for a pipe repair device defines a very simple, and therefore also economical, structure.

Furthermore, the repair device 1 for a pipe repair device defines low weights, but is, at the same time, effectively usable on a pipe repair device for pipes defining completely different diameters.

In conclusion, the repair device 1 for a pipe repair device makes it possible to make the individual pipe conform to the respective shape standard and dimensional tolerances and thus substantially repair the pipe before it is put into service.

The invention is susceptible to variations within the scope of the inventive concept as defined by the claims.

Within that scope, all details are substitutable by equivalent elements and the materials, shapes and dimensions may be any.

## Claims

1. Pipe repair device (1) comprising:
- at least one body (2) extending along a main axis (2a) between a first end (20) and a second end (21) and telescopically expanding, in a controlled manner, along said main axis (2a) so as to bring said ends (20, 21) closer to or further away from each other
- a first contact plate (3) connected to said body (2) at said first end (20) and extending along a first plane (3a) curved transversally to said main axis (2a)
- a second contact plate (4) connected to said body (2) at said second end (21) and extending along a second plane (4a) curved transversal to said main axis (2a),
and **characterised by**
- said plates (3, 4) are removably constrained to said body (2) in such a way that they can be replaced.

2. Device (1) according to claim 1, wherein said first plate (3) is larger in size than said second plate (4).

3. Device (1) according to any one of the preceding claims, wherein said first plate (3a) defines a curvature greater than said second plate (4a).

4. Device (1) according to any preceding claim, wherein said planes (3a, 4a) define curvatures that differ from each other by about 1 × 10⁻³.

5. Device (1) according to any one of the preceding claims, wherein said first end (20) is constrained to said first plate (3) at the barycentric point of said first plate (3) and said second end (21) is constrained to said second plate (4) at the barycentric point of said second plate (4).

6. Device (1) according to any one of the preceding claims, wherein said first end (20) is larger in size than said second end (21).

7. Device (1) according to any one of the preceding claims, wherein said body (2) comprises a plurality of cylinders (22) concentrically centred with respect to said main axis (2a).

8. Device (1) according to any one of the preceding claims, wherein said first plate (3) defines a rectangular outline on said first plane (3a), said second plate (4) defines a rectangular outline on said second plane (4a), a said cylinder (22) in correspondence with said first end (20) defines a diameter less than half of the diagonals of said outline of said first plate (3) and a said cylinder (22) in correspondence with said second end (21) defines a diameter less than half of the diagonals of said outline of said second plate (4).

9. Device (1) according to any one of the preceding claims, comprising a thrust mechanism configured to achieve a thrust force along said main axis (2a) from said first end (20) towards said second end (21) or vice versa.

10. Pipeline repair kit comprising a device according to claim 1 and a plurality of said plates (3, 4) replaceable on said body (2) and defining mutually different sizes and/or curvatures so as to enable adaptation of said device (1) effectively on any of said tubing.
